# FASCICULE DE BREVET EUROPEEN

(11) **EP 4 073 822 B1**
(45) Date de publication et mention de la délivrance du brevet: **13.09.2023**
(21) Numéro de dépôt: 20842008.3
(22) Date de dépôt: 08.12.2020
(51) Int. Cl.: G21F 5/005

(54) **DISPOSITIF DE RANGEMENT POUR L'ENTREPOSAGE ET/OU LE TRANSPORT D'ASSEMBLAGES DE COMBUSTIBLE NUCLEAIRE, PRÉSENTANT UNE CONCEPTION À COÛTS RÉDUITS**
KOSTENGÜNSTIGER ENTWURF FÜR EINE VORRICHTUNG ZUR LAGERUNG UND/ODER ZUM TRANSPORT VON KERNBRENNSTOFFBÜNDELN
LOW-COST DESIGN STORAGE DEVICE FOR STORING AND/OR TRANSPORTING NUCLEAR FUEL ASSEMBLIES

(30) Priorité: 11.12.2019 FR 1914132
(43) Date de publication de la demande: 19.10.2022
(73) Titulaire: ORANO NUCLEAR PACKAGES AND SERVICES, 78180 Montigny-le-Bretonneux (FR)
(72) Inventeur: TARDY, Marcel, 92320 CHATILLON (FR); NALLET, Stéphane, 78320 LE MESNIL SAINT DENIS (FR)
(74) Mandataire: Brevalex
(86) Numéro de dépôt international: PCT/FR2020/052337
(87) Numéro de publication internationale: WO 2021/116593

(56) Documents cités:
- FR-A1- 3 044 819
- JP-A- 2006 200 939

## Description

### DOMAINE TECHNIQUE

La présente invention se rapporte au domaine du transport et/ou entreposage d'assemblages de combustible nucléaire, de préférence des assemblages usés au sein desquels le combustible a été irradié.

### ETAT DE LA TECHNIQUE ANTERIEURE

Un tel dispositif, également appelé « panier » ou « râtelier » de rangement, comprend une pluralité de logements adjacents chacun apte à recevoir un assemblage de combustible nucléaire.

Ce dispositif de rangement, destiné à être logé dans une cavité d'un emballage, est conçu afin de pouvoir remplir simultanément trois fonctions essentielles, qui vont être brièvement exposées ci-dessous.

Il s'agit tout d'abord de la fonction de transfert thermique de la chaleur dégagée par les assemblages de combustible. Généralement, il est utilisé de l'aluminium ou l'un de ses alliages, en raison de ses bonnes propriétés de conduction thermique.

La seconde fonction concerne l'absorption neutronique, et le souci de maintenir la sous-criticité du dispositif de rangement lorsque celui-ci est chargé avec les assemblages de combustible. Ceci est réalisé en utilisant des matériaux absorbeurs de neutrons dits matériaux neutrophages, tels que le bore.

Enfin, la troisième fonction essentielle est relative à la résistance mécanique du dispositif. Il est noté que la résistance mécanique globale du dispositif doit être compatible avec les exigences réglementaires de sûreté pour le transport/entreposage de matières nucléaires, notamment en ce qui concerne les épreuves dites « de chute libre ».

De l'art antérieur, il est connu de former le panier en superposant des étages réalisés à l'aide d'ensembles structurels à encoches, empilés et entrecroisés. Ces ensembles sont tous réalisés à l'aide d'un même matériau à base d'aluminium, comprenant une certaine densité de bore afin de remplir la fonction d'absorption neutronique, et d'atteindre le facteur de multiplication effectif « Keff » souhaité.

Cependant, la réalisation de tels ensembles structurels à encoches avec du bore se révèle particulièrement coûteuse, impactant fortement le coût de production global du dispositif de rangement.

Un dispositif de rangement pour le transport et/ou l'entreposage d'assemblages de combustible nucléaire avec des plats borés à encoches est connu par le document de brevet FR 3 044 819 A1.

### EXPOSÉ DE L'INVENTION

L'invention a donc pour but de remédier à l'inconvénient mentionné ci-dessus, relatif aux réalisations de l'art antérieur.

Pour ce faire, l'invention a pour objet un dispositif de rangement pour le transport et/ou l'entreposage d'assemblages de combustible nucléaire, le dispositif de rangement étant destiné à être logé dans la cavité d'un emballage pour le transport et/ou l'entreposage d'assemblages de combustible nucléaire, et comportant un nombre N de logements adjacents, chacun destiné à recevoir un assemblage de combustible nucléaire, et au moins certains des N logements adjacents étant réalisés à l'aide de plats à encoches, entrecroisés et empilés selon une direction d'empilement parallèle à un axe central longitudinal du dispositif de rangement.

Selon l'invention, dans au moins un plan transversal du dispositif de rangement traversant les N logements adjacents, au moins l'un de ces logements adjacents, et de préférence chacun d'une pluralité de logements parmi ces N logements adjacents, présente une surface intérieure de délimitation de logement formée en partie par :
- une première surface d'un premier plat à encoches réalisé avec du bore, et dont une seconde surface opposée à la première surface participe à la formation de la surface intérieure de délimitation de logement d'au moins un ou plusieurs autres des N logements adjacents ; et
- une première surface d'un second plat à encoches réalisé sans bore, et dont une seconde surface opposée à la première surface participe à la formation de la surface intérieure de délimitation de logement d'au moins un ou plusieurs autres des N logements adjacents.

L'originalité de l'invention réside ainsi dans l'hétérogénéité des plats formant un même logement destiné à recevoir un assemblage de combustible nucléaire, en particulier en prévoyant au moins un second plat à encoches réalisé sans bore. Ce principe résulte d'une constatation inattendue. En effet, le coût de fabrication s'avère largement diminué lorsque le logement est réalisé avec des plats non-borés et avec d'autres plats présentant une certaine teneur en bore, en comparaison d'une solution classique aboutissant au même facteur de multiplication effectif, et où tous les plats contiennent du bore dans une teneur inférieure à ladite certaine teneur en bore précitée. En d'autres termes, l'invention prévoit d'associer des plats non borés et des plats borés avec une teneur en bore supérieure à la teneur homogène prévue dans une solution à performances équivalentes de l'art antérieur.

Ce principe participe avantageusement à réduire les coûts de production des dispositifs de rangement, tout en présentant des performances élevées d'un point de vue criticité.

L'invention prévoit également au moins l'une des caractéristiques optionnelles suivantes, prises isolément ou en combinaison.

De préférence, chacun d'une pluralité de plans transversaux du dispositif de rangement traversant chacun les N logements adjacents, au moins l'un de ces logements adjacents, et de préférence chacun d'une pluralité de logements parmi ces N logements adjacents, présente une surface intérieure de délimitation de logement formée en partie par :
- une première surface d'un premier plat à encoches réalisé avec du bore, et dont une seconde surface opposée à la première surface participe à la formation de la surface intérieure de délimitation de logement d'au moins un ou plusieurs autres des N logements adjacents ; et
- une première surface d'un second plat à encoches réalisé sans bore, et dont une seconde surface opposée à la première surface participe à la formation de la surface intérieure de délimitation de logement d'au moins un ou plusieurs autres des N logements adjacents.

Encore plus préférentiellement, cette caractéristique est observée dans tous les plans transversaux du dispositif de rangement, ou sensiblement tous ces plans.

De préférence, les N logements adjacents sont répartis en des logements périphériques et des logements intérieurs, et dans un plan transversal ou dans chacun d'une pluralité de plans transversaux du dispositif de rangement traversant chacun les N logements adjacents, au moins 50% des logements périphériques présentent chacun une surface intérieure de délimitation de logement formée en partie par :
- une première surface d'un premier plat à encoches réalisé avec du bore, et dont une seconde surface opposée à la première surface participe à la formation de la surface intérieure de délimitation de logement d'au moins un ou plusieurs autres des N logements adjacents ; et
- une première surface d'un second plat à encoches réalisé sans bore, et dont une seconde surface opposée à la première surface participe à la formation de la surface intérieure de délimitation de logement d'au moins un ou plusieurs autres des N logements adjacents.

De préférence, dans un plan transversal ou dans chacun d'une pluralité de plans transversaux du dispositif de rangement traversant chacun les N logements adjacents, au moins 50% des N logements adjacents présentent chacun une surface intérieure de délimitation de logement formée en partie par :
- une première surface d'un premier plat à encoches réalisé avec du bore, et dont une seconde surface opposée à la première surface participe à la formation de la surface intérieure de délimitation de logement d'au moins un ou plusieurs autres des N logements adjacents ; et
- une première surface d'un second plat à encoches réalisé sans bore, et dont une seconde surface opposée à la première surface participe à la formation de la surface intérieure de délimitation de logement d'au moins un ou plusieurs autres des N logements adjacents.

De préférence, dans un plan transversal ou dans chacun d'une pluralité de plans transversaux du dispositif de rangement traversant chacun les N logements adjacents, au moins l'un de ces logements adjacents, et de préférence chacun d'une pluralité de logements parmi ces N logements adjacents, présente une surface intérieure de délimitation de logement de section de forme générale carrée ou rectangulaire, et formée par :
- une première surface d'un premier plat à encoches réalisé avec du bore, et dont une seconde surface opposée à la première surface participe à la formation de la surface intérieure de délimitation de logement d'au moins un ou plusieurs autres des N logements adjacents ;
- une première surface d'un second plat à encoches réalisé sans bore, et dont une seconde surface opposée à la première surface participe à la formation de la surface intérieure de délimitation de logement d'au moins un ou plusieurs autres des N logements adjacents ; et
- deux autres plats à encoches.

De plus, le premier plat, le second plat et les deux autres plats forment respectivement les quatre côtés de la surface intérieure de délimitation de logement de section de forme générale carrée ou rectangulaire.

De préférence, lesdits deux autres plats à encoches sont formés respectivement par :
- deux premiers plats à encoches réalisés avec du bore ; ou
- deux seconds plats à encoches réalisés sans bore ; ou
- un premier plat à encoches réalisé avec du bore et un second plat à encoches réalisé sans bore.

De préférence, les plats à encoches empilés et entrecroisés au sein du dispositif de rangement sont soit des premiers plats à encoches réalisés avec du bore, de préférence avec une même teneur en bore, soit des seconds plats à encoches réalisés sans bore.

De préférence, au moins un premier plat à encoches est réalisé monobloc, de préférence dans un alliage d'aluminium comprenant du bore, et/ou en ce qu'au moins un premier plat à encoches est pourvu d'un revêtement comprenant du bore, de préférence appliqué sur un matériau en alliage d'aluminium.

De préférence, au moins un second plat à encoches est réalisé dans un alliage d'aluminium dépourvu de bore.

De préférence, les plats empilés et entrecroisés forment ensemble des cloisons de délimitation des logements adjacents, chaque cloison s'étendant sur toute la hauteur du dispositif de rangement ou sur sensiblement tout cette hauteur, et chaque cloison étant constituée :
- par l'empilement de premiers plats à encoches ; ou
- par l'empilement de seconds plats à encoches ; ou
- par l'alternance de premiers et seconds plats à encoches ; ou
- par l'alternance de premiers et seconds plats à encoches, entre lesquels sont également agencés des éléments structurels, de préférence en acier.

A cet égard, il peut être prévu au sein d'une même cloison des premiers plats à encoches avec des teneurs en bore différentes, même si préférentiellement, la teneur en bore dans les premiers plats reste constante au sein d'une même cloison. Encore plus préférentiellement, la teneur en bore dans les premiers plats reste constante au sein de l'ensemble du dispositif de rangement.

L'invention a également pour objet un emballage pour l'entreposage et/ou le transport d'assemblages de combustible nucléaire, l'emballage comprenant une cavité dans laquelle est logé un dispositif de rangement tel que décrit ci-dessus.

L'invention a également pour objet un colis comprenant un tel emballage, ainsi que des assemblages de combustible nucléaire agencés dans les logements adjacents du dispositif de rangement de cet emballage.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
[Fig. 1] représente une vue schématique en coupe d'un colis selon l'invention, comprenant en particulier un dispositif de rangement pour l'entreposage et/ou le transport d'assemblages de combustible nucléaire ;
[Fig. 2] représente une vue partielle en perspective du dispositif de rangement, selon un premier mode de réalisation préféré de la présente invention ;
[Fig. 3] est une vue partielle en coupe transversale prise selon le plan transversal P de la figure 2 ;
[Fig. 4] représente une vue en perspective d'une partie du dispositif de rangement montré sur les figures 2 et 3 ;
[Fig. 5] est une vue partielle agrandie de celle montrée sur la figure 3 ; et
[Fig. 6] représente une vue partielle agrandie similaire à celle de la figure 2, avec le dispositif de rangement se présentant sous la forme d'un second mode de réalisation préféré de l'invention.

### EXPOSÉ DÉTAILLÉ DE MODES DE RÉALISATION PRÉFÉRÉS

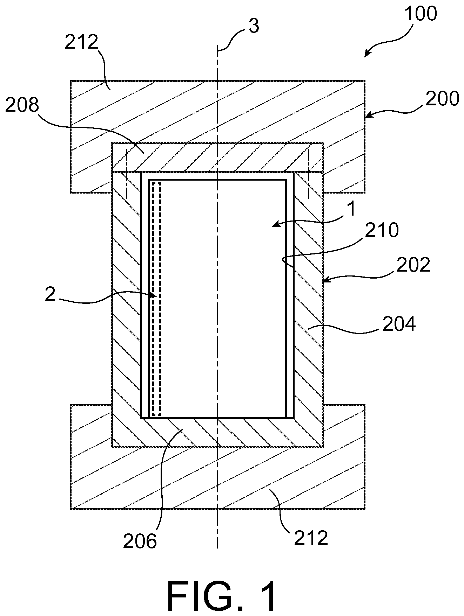

En référence à la figure 1, il est représenté un colis 100 comprenant un emballage 200 pour l'entreposage et/ou le transport d'assemblages des combustible nucléaire irradié 2. L'emballage 200 présente un corps 202 formé par un corps latéral 204, un fond 206, et un couvercle amovible 208. Le fond 206 et le couvercle 208 sont espacés l'un de l'autre selon l'axe central longitudinal 3 de l'emballage, autour duquel s'étend le corps latéral 204.

L'emballage 200 définit à l'intérieur de son corps une cavité 210, dans laquelle se trouve logé un dispositif de rangement 1, qui sera dénommé « panier » dans la suite de la description. Comme cela sera détaillé ci-après, le panier 1 comprend une pluralité de logements adjacents chacun destiné à recevoir l'un des assemblages de combustible nucléaire 2. Lorsque le panier 1 est logé dans la cavité 210 de l'emballage 200, et que les assemblages de combustible nucléaire 2 sont placés dans les logements adjacents du panier 1, le colis 100 est dit « chargé ».

A titre indicatif, il est noté qu'aux extrémités axiales de l'emballage, celui-ci peut présenter des capots amortisseurs de chocs 212, recouvrant respectivement le couvercle 208 et le fond 206 du corps 202 de cet emballage.

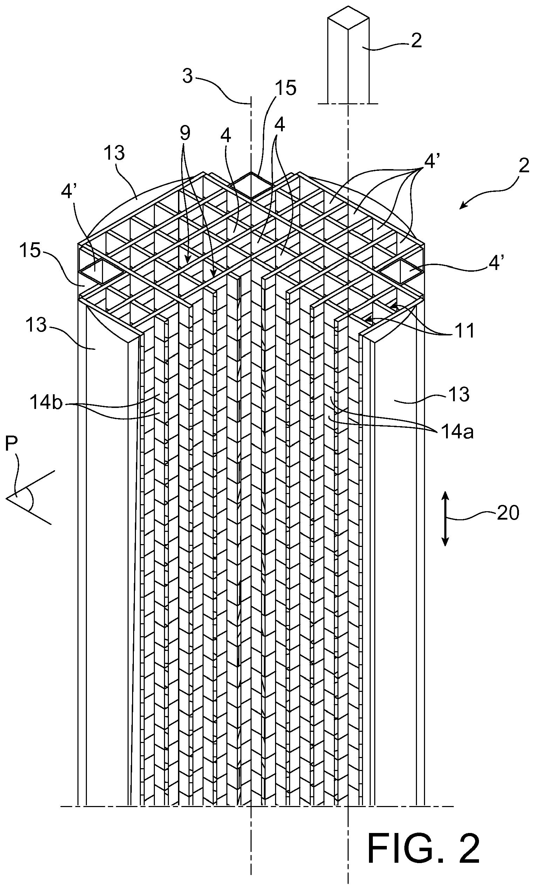

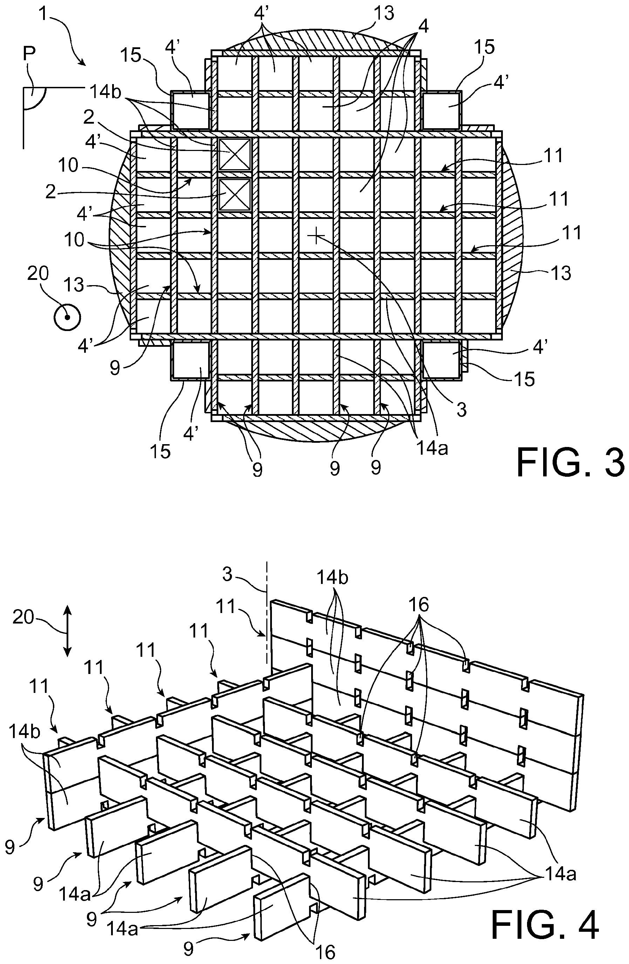

La particularité de l'invention réside dans la conception du panier 1 de transport et/ou entreposage d'assemblages de combustible nucléaire irradié, qui va à présent être décrite en référence tout d'abord aux figures 2 et 3.

Comme visible sur les figures 2 et 3, le panier 1 comprend une pluralité de logements adjacents 4, 4' disposés parallèlement à l'axe 3, ce dernier correspondant également à l'axe central longitudinal du panier.

Le nombre N de logements adjacents est ici de soixante-neuf, mais ce nombre pourrait bien entendu différer, par exemple en étant compris entre dix et cent.

Les logements 4, 4' sont chacun aptes à recevoir au moins un assemblage de combustible 2 de section carrée, et de préférence un seul. De ce fait, ils présentent chacun une surface intérieure de délimitation de logement 10, de section transversale de forme générale carrée ou rectangulaire. Par « surface intérieure de délimitation de logement 10 », il est entendu la surface des éléments de panier qui se trouve directement en regard de la surface extérieure des assemblages de combustible 2, comme cela a été représenté pour deux d'entre eux sur la figure 3.

Les logements 4, 4' sont donc prévus de manière à être juxtaposés les uns aux autres. Ils sont réalisés par l'intermédiaire d'une pluralité de premières cloisons de séparation 9 parallèles entre elles, et d'une pluralité de secondes cloisons de séparation 11 parallèle entre elles, et perpendiculaires aux premières cloisons 9.

Les premières et secondes cloisons 9, 11 sont toutes parallèles à l'axe 3. Dans le mode de réalisation montré sur les figures 2 et 3, il est prévu huit premières cloisons 9, ainsi que huit secondes cloisons 11. Ces cloisons 9, 11 sont complétées par quatre cloisons périphériques 13, ainsi que par quatre tubes 15 formant chacun un logement périphérique 4'. A cet égard, il est noté que les N logements adjacents sont répartis en un nombre N1 de logements périphériques 4', et un nombre N2 de logements intérieurs 4. Ici, il s'agit de vingt-quatre logements périphériques 4', et de quarante-cinq logements intérieurs 4. Par « logements périphériques », il est entendu des logements traversés par une ligne fictive périphérique du panier 1, et définissant une rangée périphérique fermée de logements 4', dans laquelle sont circonscrits les logements intérieurs 4. Ainsi, les N1 logements périphériques 4' sont ici répartis en quatre segments périphériques de cinq logements 4', et en quatre logements 4' chacun défini par l'un des tubes 15 agencés entre les extrémités desdits segments périphériques.

Les premières et secondes cloisons de séparation 9, 11 sont réalisées à l'aide de plats 14a, 14b empilés selon l'axe 3, et entrecroisés. Plus précisément, cet empilement de plats à encoches permet de délimiter la totalité des N2 logements intérieurs 4, et ils participent également en partie à la délimitation des logements périphériques 4', à l'exception de ceux définis par les tubes 15.

Comme cela est visible sur la figure 4 montrant seulement une partie des plats 14a, 14b du panier 1, chacun d'eux présente des encoches 16 sur ses chants inférieurs et supérieurs. Les encoches 16 des plats 14a, 14b coopèrent alors deux à deux pour former la structure dite « en matrice », dans laquelle les plats 14a, 14b sont empilés et entrecroisés de manière orthogonale.

Dans ce premier mode de réalisation préféré, chaque cloison 9, 11 résultant de l'empilement et de l'entrecroisement des plats 14a, 14b, est de préférence formée par la succession de plusieurs premiers plats 14a, ou par la succession de plusieurs seconds plats 14b. Chaque cloison ainsi constituée s'étend alors sur toute la hauteur du panier 1, et sur sensiblement toute cette hauteur dont la direction est parallèle à l'axe 3. Dans la direction transversale, chaque cloison de séparation 9, 11 s'étend également localement sur toute la largeur du panier 1, et il en est de même pour chaque plat 14a, 14b formant ces cloisons.

Les premiers et seconds plats 14a, 14b sont ainsi empilés selon une direction d'empilement 20 correspondant à la direction de la hauteur du panier 1, parallèle à l'axe 3. De préférence, tous les premiers plats 14a sont réalisés dans un même matériau, de même que tous les seconds plats 14b sont réalisés dans un même matériau différent de celui des premiers plats.

Pour ce qui concerne les premiers plats 14a, ils comprennent du bore. Ils sont de préférence réalisés monobloc, dans un alliage d'aluminium comportant du bore. Le bore peut alors être réparti de manière homogène dans le plat 14a, ou de manière hétérogène. La teneur en bore dans l'alliage est adaptée en fonction de plusieurs critères comme le facteur de multiplication effectif « Keff » souhaité, le rapport entre le nombre de premiers plats 14a et le nombre de seconds plats 14b, la position des premiers plats 14a au sein du panier, etc. A titre d'exemple indicatif, la teneur massique en bore peut atteindre 16% ou plus dans l'alliage, mais cette valeur peut aussi être abaissée à quelques pourcents seulement.

Alternativement, au lieu d'être monobloc, chaque premier plat 14a pourrait être un plat monobloc pourvu d'un revêtement surfacique comprenant bore. Dans ce cas de figure, le plat monobloc pourrait être réalisé en alliage d'aluminium, et le revêtement pourrait être déposé selon toutes techniques connues, comme par exemple la pulvérisation à froid ou à chaud de particules de carbure de bore.

De préférence, la teneur en bore est identique ou sensiblement identique pour tous les premiers plats 14a du panier 1.

Pour ce qui concerne les seconds plats 14b, ils sont dépourvus du bore. Ils sont également dépourvus de tout autre élément neutrophage, c'est-à-dire exempts d'éléments absorbeurs de neutrons. Par « éléments absorbeurs de neutrons », il est entendu des éléments qui présentent une section efficace supérieure à 100 barns pour les neutrons thermiques. A titre d'exemples indicatifs, il s'agit d'alliage d'aluminium dépourvus de bore, de gadolinium, d'hafnium, de cadmium, d'indium, etc.

Pour les seconds plats 14b, ils sont également de préférence réalisés dans un alliage d'aluminium, mais donc dépourvu de bore.

A cet égard, il est noté que par « plat », il est entendu un élément de forme générale plane, dont l'épaisseur entre ses surfaces opposées est de dimension inférieure à chacune des dimensions dans les deux autres directions orthogonales à la direction d'épaisseur, et orthogonales entre elles. De plus, pour chaque plat, il peut s'agir d'un unique élément plat, ou d'une superposition de plusieurs éléments plats, dans la direction de l'épaisseur. Selon encore une autre alternative, il peut s'agir d'un élément tubulaire renfermant un plat de section complémentaire. Chaque plat est préférentiellement plein ou sensiblement plein, en dehors des zones évidées formant les encoches.

L'une des particularités de l'invention réside dans le fait d'effectuer un choix judicieux entre les premiers et les seconds plats 14a, 14b pour réaliser chacune des cloisons 9, 11 du panier 1. D'une manière générale, la densité de cloisons réalisées à partir des premiers plats 14a comprenant du bore est plus élevée au centre du panier, qu'à sa périphérie. Aussi, certains logements intérieurs 4 et périphériques 4' sont réalisés par l'association de premiers plats 14a comprenant du bore, et de seconds plats 14b dépourvus de bore.

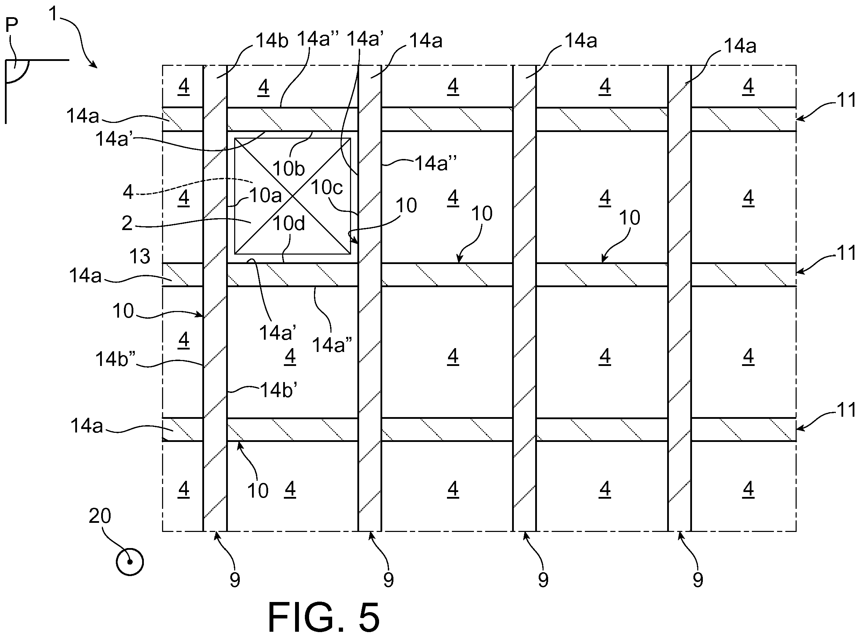

Plus précisément, dans au moins un plan transversal du panier 1 tel que le plan de coupe P de la figure 5, et de préférence dans tous ces plans transversaux ou sensiblement tous ces plans transversaux du panier 1, la surface intérieure de délimitation de logement 10 d'au moins l'un des N2 logements intérieurs 4 est formée en partie par un premier plat 14a, et un second plat 14b.

Pour expliquer encore plus précisément la conception, il va être fait référence au logement 4 de la figure 5, dans lequel l'assemblage de combustible 2 a été représenté. Pour ce logement 4, dans le plan transversal du panier, sa surface intérieure de délimitation de logement 10 est constituée par quatre côtés 10a, 10b, 10c, 10d respectivement formés par un second plat 14b et trois premiers plats 14a.

Encore plus précisément, toujours dans le plan transversal, le premier côté 10a de la surface intérieure de délimitation de logement 10 est réalisé par une première surface 14b' du second plat 14b. Il est à noter que la seconde surface 14b" de ce même second plat 14b, opposée à la première surface 14b', participe également à la formation de la surface intérieure de délimitation de logement 10 d'un ou plusieurs autres logements adjacents 4, 4' du panier. De même, les second, troisième et quatrième côtés 10b, 10c, 10d de la surface intérieure de délimitation de logement 10 sont respectivement réalisés par une première surface 14a' de trois premiers plats 14a. La seconde surface 14a" de chacun de ces premiers plats 14a, opposée à la première surface 14a', participe également à la formation de la surface intérieure de délimitation de logement 10 d'un ou plusieurs autres logements adjacents 4, 4' du panier.

Ainsi, même si certains logements 4 agencés à proximité ou sur le centre du panier 1 peuvent être réalisés uniquement à partir de premiers plats 14a, ceux situés davantage vers la périphérie peuvent résulter d'une association entre une ou plusieurs cloisons réalisées à partir de premiers plats 14a, et une ou plusieurs cloisons réalisées à partir de seconds plats 14b.

Dans l'exemple du logement chargé 4 de la figure 5, il s'agit donc d'une seule cloison de séparation 9 réalisée à partir de seconds plats 14b dépourvus de bore, et de trois cloisons de séparation 9, 11 réalisées à partir de premiers plats 14a comprenant du bore. Alternativement, pour ces logements intérieurs 4 résultant d'une association entre des cloisons de différentes natures, il pourrait s'agir de deux cloisons de séparation 9, 11 réalisées à partir de seconds plats 14b dépourvus de bore, et de deux cloisons de séparation 9, 11 réalisées à partir de premiers plats 14a comprenant du bore. Dans ce dernier cas, les cloisons de mêmes natures pourraient être directement consécutives et orthogonales deux à deux, ou bien parallèles deux à deux.

Comme cela ressort de ce qui précède, en section transversale telle que celles des figures 3 et 5, la surface intérieure de délimitation 10 de plusieurs logements 4, 4' prend la forme de quatre segments de droites 10a-10d, correspondant respectivement aux surfaces concernées 14a', 14a", 14b', 14b" des plats 14a, 14b.

De préférence, l'association de cloisons de séparation 9, 11 de différentes natures concerne au moins 50% des N logements 4, 4' du panier, et au moins 50% des logements périphériques 4'. Il est par ailleurs noté que certains de ces logements 4' sont également fermés par les cloisons périphériques 13, par exemple réalisées en alliage d'aluminium.

Grâce à cette association de cloisons de séparation 9, 11 dont certaines contiennent du bore et d'autres non, les coûts de fabrication sont réduits tout en obtenant des performances élevées en matière de maintien de la sous-criticité.

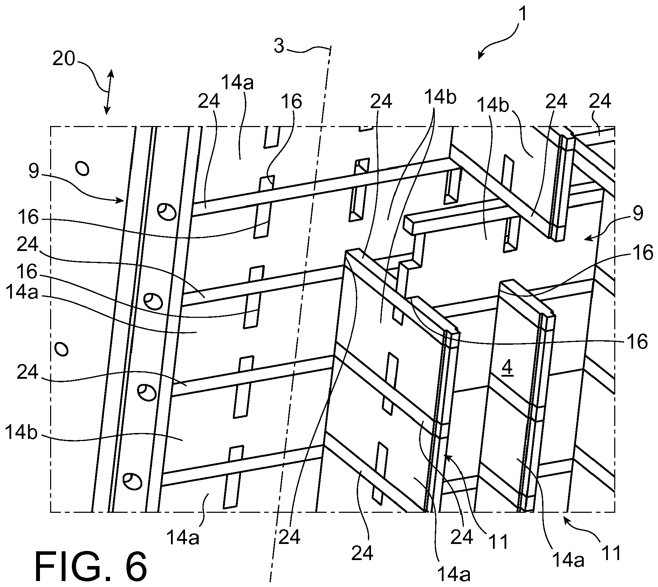

Selon un second mode de réalisation montré sur la figure 6 et répondant toujours au principe général de l'invention, les cloisons de séparation ne sont plus toutes nécessairement réalisées avec le même type de plats 14a, 14b. En effet, au moins certaines de ces cloisons de séparation 9, 11 sont réalisées par l'alternance de premiers plats 14a et de seconds plats 14b, selon la direction d'empilement 20. Dans cette hypothèse, des éléments structurels 24 peuvent être introduits dans l'empilement entre deux plats 14a, 14b directement consécutifs, comme cela a été représenté sur la figure 6. Ces éléments structurels 24, de préférence en acier, peuvent prendre la forme de barres introduites dans les encoches 16 des plats 14a, 14b.

Bien entendu, diverses modifications peuvent être apportées par l'homme du métier aux dispositifs de rangement 1 qui viennent d'être décrits, uniquement à titre d'exemples non limitatifs.

## Revendications

1. Dispositif de rangement (1) pour le transport et/ou l'entreposage d'assemblages de combustible nucléaire (2), le dispositif de rangement étant destiné à être logé dans la cavité d'un emballage (200) pour le transport et/ou l'entreposage d'assemblages de combustible nucléaire, et comportant un nombre N de logements adjacents (4, 4'), chacun destiné à recevoir un assemblage de combustible nucléaire (2),
au moins certains des N logements adjacents (N) étant réalisés à l'aide de plats à encoches (14a, 14b), entrecroisés et empilés selon une direction d'empilement (20) parallèle à un axe central longitudinal (3) du dispositif de rangement, et dans au moins un plan transversal du dispositif de rangement traversant les N logements adjacents (4, 4'), au moins l'un de ces logements adjacents, et de préférence chacun d'une pluralité de logements parmi ces N logements adjacents (4, 4'), présente une surface intérieure de délimitation de logement (10) formée en partie par :
- une première surface (14a') d'un premier plat à encoches (14a) réalisé avec du bore, et dont une seconde surface (14a") opposée à la première surface (14a') participe à la formation de la surface intérieure de délimitation de logement (10) d'au moins un ou plusieurs autres des N logements adjacents (4, 4') ; et caractérisé en
- une première surface (14b') d'un second plat à encoches (14b) réalisé sans bore, et dont une seconde surface (14b") opposée à la première surface (14b') participe à la formation de la surface intérieure de délimitation de logement (10) d'au moins un ou plusieurs autres des N logements adjacents (4, 4').

2. Dispositif de rangement selon la revendication 1, **caractérisé en ce que** dans chacun d'une pluralité de plans transversaux du dispositif de rangement traversant chacun les N logements adjacents (4, 4'), au moins l'un de ces logements adjacents, et de préférence chacun d'une pluralité de logements parmi ces N logements adjacents, présente une surface intérieure de délimitation de logement (10) formée en partie par
- une première surface (14a') d'un premier plat à encoches (14a) réalisé avec du bore, et dont une seconde surface (14a") opposée à la première surface (14a') participe à la formation de la surface intérieure de délimitation de logement (10) d'au moins un ou plusieurs autres des N logements adjacents (4, 4') ; et
- une première surface (14b') d'un second plat à encoches (14b) réalisé sans bore, et dont une seconde surface (14b") opposée à la première surface (14b') participe à la formation de la surface intérieure de délimitation de logement (10) d'au moins un ou plusieurs autres des N logements adjacents (4, 4').

3. Dispositif de rangement selon la revendication 1 ou la revendication 2, **caractérisé en ce que** les N logements adjacents (4, 4') sont répartis en des logements périphériques (4') et des logements intérieurs (4),
et **en ce que** dans un plan transversal ou dans chacun d'une pluralité de plans transversaux du dispositif de rangement traversant chacun les N logements adjacents (4, 4'), au moins 50% des logements périphériques (4') présentent chacun une surface intérieure de délimitation de logement (10) formée en partie par :
- une première surface (14a') d'un premier plat à encoches (14a) réalisé avec du bore, et dont une seconde surface (14a") opposée à la première surface (14a') participe à la formation de la surface intérieure de délimitation de logement (10) d'au moins un ou plusieurs autres des N logements adjacents (4, 4') ; et
- une première surface (14b') d'un second plat à encoches (14b) réalisé sans bore, et dont une seconde surface (14b") opposée à la première surface (14b') participe à la formation de la surface intérieure de délimitation de logement (10) d'au moins un ou plusieurs autres des N logements adjacents (4, 4').

4. Dispositif de rangement selon l'une quelconque des revendications précédentes, **caractérisé en ce que** dans un plan transversal ou dans chacun d'une pluralité de plans transversaux du dispositif de rangement traversant chacun les N logements adjacents (4, 4'), au moins 50% des N logements adjacents présentent chacun une surface intérieure de délimitation de logement (10) formée en partie par :
- une première surface (14a') d'un premier plat à encoches (14a) réalisé avec du bore, et dont une seconde surface (14a") opposée à la première surface (14a') participe à la formation de la surface intérieure de délimitation de logement (10) d'au moins un ou plusieurs autres des N logements adjacents (4, 4') ; et
- une première surface (14b') d'un second plat à encoches (14b) réalisé sans bore, et dont une seconde surface (14b") opposée à la première surface (14b') participe à la formation de la surface intérieure de délimitation de logement (10) d'au moins un ou plusieurs autres des N logements adjacents (4, 4').

5. Dispositif de rangement selon l'une quelconque des revendications précédentes, **caractérisé en ce que** dans un plan transversal ou dans chacun d'une pluralité de plans transversaux du dispositif de rangement traversant chacun les N logements adjacents (4, 4"), au moins l'un de ces logements adjacents, et de préférence chacun d'une pluralité de logements parmi ces N logements adjacents, présente une surface intérieure de délimitation de logement (10) de section de forme générale carrée ou rectangulaire, et formée par :
- une première surface (14a') d'un premier plat à encoches (14a) réalisé avec du bore, et dont une seconde surface (14a") opposée à la première surface (14a') participe à la formation de la surface intérieure de délimitation de logement (10) d'au moins un ou plusieurs autres des N logements adjacents (4, 4') ;
- une première surface (14b') d'un second plat à encoches (14b) réalisé sans bore, et dont une seconde surface (14b") opposée à la première surface (14b') participe à la formation de la surface intérieure de délimitation de logement (10) d'au moins un ou plusieurs autres des N logements adjacents (4, 4') ; et
- deux autres plats à encoches (14a, 14b),
et **en ce que** le premier plat (14a), le second plat (14b) et les deux autres plats (14a, 14b) forment respectivement les quatre côtés (10a-10d) de la surface intérieure de délimitation de logement (10) de section de forme générale carrée ou rectangulaire.

6. Dispositif de rangement selon la revendication 5, **caractérisé en ce que** lesdits deux autres plats à encoches (14a, 14b) sont formés respectivement par :
- deux premiers plats à encoches (14a) réalisés avec du bore ; ou
- deux seconds plats à encoches (14b) réalisés sans bore ; ou
- un premier plat à encoches (14a) réalisé avec du bore et un second plat à encoches (14b) réalisé sans bore.

7. Dispositif de rangement selon l'une quelconque des revendications précédentes, **caractérisé en ce que** les plats à encoches (14a, 14b) empilés et entrecroisés au sein du dispositif de rangement sont soit des premiers plats à encoches (14a) réalisés avec du bore, de préférence avec une même teneur en bore, soit des seconds plats à encoches (14b) réalisés sans bore.

8. Dispositif de rangement selon l'une quelconque des revendications précédentes, **caractérisé en ce qu'**au moins un premier plat à encoches (14a) est réalisé monobloc, de préférence dans un alliage d'aluminium comprenant du bore, et/ou **en ce qu'**au moins un premier plat à encoches (14a) est pourvu d'un revêtement comprenant du bore, de préférence appliqué sur un matériau en alliage d'aluminium.

9. Dispositif de rangement selon l'une quelconque des revendications précédentes, **caractérisé en ce qu'**au moins un second plat à encoches (14b) est réalisé dans un alliage d'aluminium dépourvu de bore.

10. Dispositif de rangement selon l'une quelconque des revendications précédentes, **caractérisé en ce que** les plats empilés et entrecroisés (14a, 14b) forment ensemble des cloisons de séparation (9, 11) des logements adjacents (4, 4'), chaque cloison (9, 11) s'étendant sur toute la hauteur du dispositif de rangement ou sur sensiblement tout cette hauteur, et chaque cloison étant constituée :
- par l'empilement de premiers plats à encoches (14a) ; ou
- par l'empilement de seconds plats à encoches (14b) ; ou
- par l'alternance de premiers et seconds plats à encoches (14a, 14b) ; ou
- par l'alternance de premiers et seconds plats à encoches (14a, 14b), entre lesquels sont également agencés des éléments structurels (24), de préférence en acier.

11. Emballage (200) pour l'entreposage et/ou le transport d'assemblages de combustible nucléaire, l'emballage comprenant une cavité (210) dans laquelle est logé un dispositif de rangement (1) selon l'une quelconque des revendications précédentes.

12. Colis (100) comprenant un emballage (200) selon la revendication 11 ainsi que des assemblages de combustible nucléaire (2) agencés dans les logements adjacents (4, 4') du dispositif de rangement (1) de cet emballage (200).

## Patentansprüche

1. Ablagevorrichtung (1) für den Transport und/oder die Lagerung von Kernbrennstoffbündeln (2), wobei die Ablagevorrichtung dazu bestimmt ist, im Hohlraum eines Gebindes (200) für den Transport und/oder die Lagerung von Kernbrennstoffbündeln untergebracht zu werden, und eine Anzahl N an benachbarten Aufnahmen (4, 4') beinhaltet, von denen jede dazu bestimmt ist, ein Kernbrennstoffbündel (2) zu empfangen, wobei mindestens bestimmte der N benachbarten Aufnahmen (N) mithilfe von Flachprofilen mit Aussparungen (14a, 14b) verwirklicht sind, die in einer Stapelungsrichtung (20) parallel zu einer Längsmittelachse (3) der Ablagevorrichtung ineinandergreifen und gestapelt sind, und
in mindestens einer Querebene der Ablagevorrichtung, die die N benachbarten Aufnahmen (4, 4') durchquert, mindestens eine dieser benachbarten Aufnahmen, und vorzugsweise jede einer Vielzahl von Aufnahmen aus diesen N benachbarten Aufnahmen (4, 4') eine Innenoberfläche zur Begrenzung einer Aufnahme (10) aufweist, die teilweise gebildet wird, durch:
- eine erste Oberfläche (14a') eines ersten Flachprofils mit Aussparungen (14a), das mit Bor verwirklicht ist, und von dem eine zweite Oberfläche (14a") gegenüber der ersten Oberfläche (14a') sich an der Bildung der Innenoberfläche zur Begrenzung einer Aufnahme (10) von mindestens einer oder mehreren anderen der N benachbarten Aufnahmen (4, 4') beteiligt; und **gekennzeichnet durch**
- eine erste Oberfläche (14b') eines zweiten Flachprofils mit Aussparungen (14b), das ohne Bor verwirklicht ist, und von dem eine zweite Oberfläche (14b") gegenüber der ersten Oberfläche (14b') sich an der Bildung der Innenoberfläche zur Begrenzung einer Aufnahme (10) von mindestens einer oder mehreren anderen der N benachbarten Aufnahmen (4, 4') beteiligt.

2. Ablagevorrichtung nach Anspruch 1, **dadurch gekennzeichnet, dass** in jeder einer Vielzahl von Querebenen der Ablagevorrichtung, die jede der N benachbarten Aufnahmen (4, 4') durchquert, mindestens eine dieser benachbarten Aufnahmen, und vorzugsweise jede einer Vielzahl von Aufnahmen aus diesen N benachbarten Aufnahmen eine Innenoberfläche zur Begrenzung einer Aufnahme (10) aufweist, die teilweise gebildet wird durch
- eine erste Oberfläche (14a') eines ersten Flachprofils mit Aussparungen (14a), das mit Bor verwirklicht ist, und von dem eine zweite Oberfläche (14a") gegenüber der ersten Oberfläche (14a') sich an der Bildung der Innenoberfläche zur Begrenzung einer Aufnahme (10) von mindestens einer oder mehreren anderen der N benachbarten Aufnahmen (4, 4') beteiligt; und
- eine erste Oberfläche (14b') eines zweiten Flachprofils mit Aussparungen (14b), das ohne Bor verwirklicht ist, und von dem eine zweite Oberfläche (14b") gegenüber der ersten Oberfläche (14b') sich an der Bildung der Innenoberfläche zur Begrenzung einer Aufnahme (10) von mindestens einer oder mehreren anderen der N benachbarten Aufnahmen (4, 4') beteiligt.

3. Ablagevorrichtung nach Anspruch 1 oder Anspruch 2, **dadurch gekennzeichnet, dass** die N benachbarten Aufnahmen (4, 4') in umlaufende Aufnahmen (4') und innere Aufnahmen (4) aufgeteilt sind,
und dadurch, dass in einer Querebene oder in jeder einer Vielzahl von Querebenen der Ablagevorrichtung, die jede der N benachbarten Aufnahmen (4, 4') durchquert, mindestens 50% der umlaufenden Aufnahmen (4') jeweils eine Innenoberfläche zur Begrenzung einer Aufnahme (10) aufweisen, teilweise gebildet durch:
- eine erste Oberfläche (14a') eines ersten Flachprofils mit Aussparungen (14a), das mit Bor verwirklicht ist, und von dem eine zweite Oberfläche (14a") gegenüber der ersten Oberfläche (14a') sich an der Bildung der Innenoberfläche zur Begrenzung einer Aufnahme (10) von mindestens einer oder mehreren anderen der N benachbarten Aufnahmen (4, 4') beteiligt; und
- eine erste Oberfläche (14b') eines zweiten Flachprofils mit Aussparungen (14b), das ohne Bor verwirklicht ist, und von dem eine zweite Oberfläche (14b") gegenüber der ersten Oberfläche (14b') sich an der Bildung der Innenoberfläche zur Begrenzung einer Aufnahme (10) von mindestens einer oder mehreren anderen der N benachbarten Aufnahmen (4, 4') beteiligt.

4. Ablagevorrichtung nach einem der vorstehenden Ansprüche, **dadurch gekennzeichnet, dass** in einer Querebene oder in jeder einer Vielzahl von Querebenen der Ablagevorrichtung, die jede der N benachbarten Aufnahmen (4, 4') durchquert, mindestens 50% der N benachbarten Aufnahmen jeweils eine Innenoberfläche zur Begrenzung einer Aufnahme (10) aufweisen, teilweise gebildet durch:
- eine erste Oberfläche (14a') eines ersten Flachprofils mit Aussparungen (14a), das mit Bor verwirklicht ist, und von dem eine zweite Oberfläche (14a") gegenüber der ersten Oberfläche (14a') sich an der Bildung der Innenoberfläche zur Begrenzung einer Aufnahme (10) von mindestens einer oder mehreren anderen der N benachbarten Aufnahmen (4, 4') beteiligt; und
- eine erste Oberfläche (14b') eines zweiten Flachprofils mit Aussparungen (14b), das ohne Bor verwirklicht ist, und von dem eine zweite Oberfläche (14b") gegenüber der ersten Oberfläche (14b') sich an der Bildung der Innenoberfläche zur Begrenzung einer Aufnahme (10) von mindestens einer oder mehreren anderen der N benachbarten Aufnahmen (4, 4') beteiligt.

5. Ablagevorrichtung nach einem der vorstehenden Ansprüche, **dadurch gekennzeichnet, dass** in einer Querebene oder in jeder einer Vielzahl von Querebenen der Ablagevorrichtung, die jede der N benachbarten Aufnahmen (4, 4") durchquert, mindestens eine dieser benachbarten Aufnahmen, und vorzugsweise jede einer Vielzahl von Aufnahmen aus diesen N benachbarten Aufnahmen eine Innenoberfläche zur Begrenzung einer Aufnahme (10) mit einem Querschnitt in einer allgemeinen quadratischen oder rechteckigen Form aufweist, und gebildet ist, durch:
- eine erste Oberfläche (14a') eines ersten Flachprofils mit Aussparungen (14a), das mit Bor verwirklicht ist, und von dem eine zweite Oberfläche (14a") gegenüber der ersten Oberfläche (14a') sich an der Bildung der Innenoberfläche zur Begrenzung einer Aufnahme (10) von mindestens einer oder mehreren anderen der N benachbarten Aufnahmen (4, 4') beteiligt;
- eine erste Oberfläche (14b') eines zweiten Flachprofils mit Aussparungen (14b), das ohne Bor verwirklicht ist, und von dem eine zweite Oberfläche (14b") gegenüber der ersten Oberfläche (14b') sich an der Bildung der Innenoberfläche zur Begrenzung einer Aufnahme (10) von mindestens einer oder mehreren anderen der N benachbarten Aufnahmen (4, 4') beteiligt; und
- zwei weitere Flachprofile mit Aussparungen (14a, 14b),
und dadurch, dass das erste Flachprofil (14a), das zweite Flachprofil (14b) und die beiden anderen Flachprofile (14a, 14b) jeweils die vier Seiten (10a-10d) der Innenoberfläche zur Begrenzung einer Aufnahme (10) mit einem Querschnitt in einer allgemeinen quadratischen oder rechteckigen Form bilden.

6. Ablagevorrichtung nach Anspruch 5, **dadurch gekennzeichnet, dass** die beiden Flachprofile mit Aussparungen (14a, 14b) jeweils gebildet werden durch:
- zwei erste Flachprofile mit Aussparungen (14a), die mit Bor verwirklicht sind; oder
- zwei zweite Flachprofile mit Aussparungen (14b), die ohne Bor verwirklicht sind; oder
- ein erstes Flachprofil mit Aussparungen (14a), das mit Bor verwirklicht ist, und ein zweites Flachprofil mit Aussparungen (14b), das ohne Bor verwirklicht ist.

7. Ablagevorrichtung nach einem der vorstehenden Ansprüche, **dadurch gekennzeichnet, dass** die ineinandergreifenden und gestapelten Flachprofile mit Aussparungen (14a, 14b) in der Ablagevorrichtung entweder erste Flachprofile mit Aussparungen (14a) sind, die mit Bor, vorzugsweise einem gleichen Borgehalt, verwirklicht sind, oder zweite Flachprofile mit Aussparungen (14b), die ohne Bor verwirklicht sind.

8. Ablagevorrichtung nach einem der vorstehenden Ansprüche, **dadurch gekennzeichnet, dass** mindestens ein erstes Flachprofil mit Aussparungen (14a) aus einem Stück, vorzugsweise aus einer Aluminiumlegierung verwirklicht ist, die Bor umfasst, und/oder dadurch, dass mindestens ein erstes Flachprofil mit Aussparungen (14a) mit einer Beschichtung versehen ist, die Bor umfasst, die vorzugsweise auf einen Werkstoff aus Aluminiumlegierung aufgetragen ist.

9. Ablagevorrichtung nach einem der vorstehenden Ansprüche, **dadurch gekennzeichnet, dass** mindestens ein zweites Flachprofil mit Aussparungen (14b) aus einer Aluminiumlegierung verwirklicht ist, die nicht mit Bor versehen ist.

10. Ablagevorrichtung nach einem der vorstehenden Ansprüche, **dadurch gekennzeichnet, dass** die gestapelten und ineinandergreifenden Flachprofile (14a, 14b) gemeinsam Trennwände (9, 11) der benachbarten Aufnahmen (4, 4') bilden, wobei sich jede Wand (9, 11) über die gesamte Höhe der Ablagevorrichtung oder über im Wesentlichen diese gesamte Höhe erstreckt, und jede Wand aufgebaut ist:
- durch Stapelung erster Flachprofile mit Aussparungen (14a); oder
- durch Stapelung zweiter Flachprofile mit Aussparungen (14b); oder
- durch die Abwechslung erster und zweiter Flachprofile mit Aussparungen (14a, 14b); oder
- durch die Abwechslung erster und zweiter Flachprofile mit Aussparungen (14a, 14b), zwischen denen auch Strukturelemente (24), vorzugsweise aus Stahl, angeordnet sind.

11. Gebinde (200) zum Lagern und/oder zum Transportieren von Kernbrennstoffbündeln, wobei das Gebinde einen Hohlraum (210) umfasst, in dem eine Ablagevorrichtung (1) nach einem der vorstehenden Ansprüche aufgenommen ist.

12. Paket (100), umfassend ein Gebinde (200) nach Anspruch 11, sowie Kernbrennstoffbündel (2), die in den benachbarten Aufnahmen (4, 4') der Ablagevorrichtung (1) dieses Gebindes (200) angeordnet sind.

## Claims

1. Storage device (1) for transporting and/or storing nuclear fuel assemblies (2), the storage device being intended to be housed in the cavity of a container (200) for transporting and/or storing nuclear fuel assemblies, and including a number N of adjacent housings (4, 4'), each intended to receive a nuclear fuel assembly (2),
at least some of the N adjacent housings (N) being produced from flat bars with notches (14a, 14b), interlocked and stacked along a stacking direction (20) parallel with a central longitudinal axis (3) of the storage device,
and in at least one transverse plane of the storage device passing through the N adjacent housings (4, 4'), at least one of these adjacent housings, and preferably each of a plurality of housings from these N adjacent housings (4, 4'), has an inner housing delimiting surface (10) formed in part by:
- a first surface (14a') of a first flat bar with notches (14a) produced with boron, and of which a second surface (14a") opposite the first surface (14a') contributes to the formation of the inner housing delimiting surface (10) of one or more others of the N adjacent housings (4, 4'); and **characterised in that**
- a first surface (14b') of a second flat bar with notches (14b) produced without boron, and of which a second surface (14b") opposite the first surface (14b') contributes to the formation of the inner housing delimiting surface (10) of one or more others of the N adjacent housings (4, 4').

2. Storage device according to claim 1, **characterised in that** each of a plurality of transverse planes of the storage device passing through each of the N adjacent housings (4, 4'), at least one of these adjacent housings, and preferably each of a plurality of housings from these N adjacent housings, has an inner housing delimiting surface (10) formed in part by:
- a first surface (14a') of a first flat bar with notches (14a) produced with boron, and of which a second surface (14a") opposite the first surface (14a') contributes to the formation of the inner housing delimiting surface (10) of one or more others of the N adjacent housings (4, 4'); and
- a first surface (14b') of a second flat bar with notches (14b) produced without boron, and of which a second surface (14b") opposite the first surface (14b') contributes to the formation of the inner housing delimiting surface (10) of one or more others of the N adjacent housings (4, 4').

3. Storage device according to claim 1 or claim 2, **characterised in that** the N adjacent housings (4, 4') are divided into peripheral housings (4') and inner housings (4),
and **in that** in a transverse plane or in each of a plurality of transverse planes of the storage device passing through each of the N adjacent housings (4, 4'), at least 50% of the peripheral housings (4') each have an inner housing delimiting surface (10) formed in part by:
- a first surface (14a') of a first flat bar with notches (14a) produced with boron, and of which a second surface (14a") opposite the first surface (14a') contributes to the formation of the inner housing delimiting surface (10) of one or more others of the N adjacent housings (4, 4'); and
- a first surface (14b') of a second flat bar with notches (14b) produced without boron, and of which a second surface (14b") opposite the first surface (14b') contributes to the formation of the inner housing delimiting surface (10) of one or more others of the N adjacent housings (4, 4').

4. Storage device according to any one of the preceding claims, **characterised in that** in a transverse plane or in each of a plurality of transverse planes of the storage device passing through each of the N adjacent housings (4, 4'), at least 50% of the N adjacent housings each have an inner housing delimiting surface (10) formed in part by:
- a first surface (14a') of a first flat bar with notches (14a) produced with boron, and of which a second surface (14a") opposite the first surface (14a') contributes to the formation of the inner housing delimiting surface (10) of one or more others of the N adjacent housings (4, 4'); and
- a first surface (14b') of a second flat bar with notches (14b) produced without boron, and of which a second surface (14b") opposite the first surface (14b') contributes to the formation of the inner housing delimiting surface (10) of one or more others of the N adjacent housings (4, 4').

5. Storage device according to any one of the preceding claims, **characterised in that** in a transverse plane or in each of a plurality of transverse planes of the storage device passing through each of the N adjacent housings (4, 4"), at least one of these adjacent housings, and preferably each of a plurality of housings from these N adjacent housings, has an inner housing delimiting surface (10) having a square or rectangular general cross-section, and formed by:
- a first surface (14a') of a first flat bar with notches (14a) produced with boron, and of which a second surface (14a") opposite the first surface (14a') contributes to the formation of the inner housing delimiting surface (10) of one or more others of the N adjacent housings (4, 4');
- a first surface (14b') of a second flat bar with notches (14b) produced without boron, and of which a second surface (14b") opposite the first surface (14b') contributes to the formation of the inner housing delimiting surface (10) of one or more others of the N adjacent housings (4, 4'); and
- two other flat bars with notches (14a, 14b),
and **in that** the first flat bar (14a), the second flat bar (14b) and the two other flat bars (14a, 14b) respectively form the four sides (10a-10d) of the inner housing delimiting surface (10) having a square or rectangular general cross-section.

6. Storage device according to claim 5, **characterised in that** said two other flat bars with notches (14a, 14b) are formed respectively by:
- two first flat bars with notches (14a) produced with boron; or
- two second flat bars with notches (14b) produced without boron; or
- a first flat bar with notches (14a) produced with boron and a second flat bar with notches (14b) produced without boron.

7. Storage device according to any one of the preceding claims, **characterised in that** the flat bars with notches (14a, 14b) stacked and interlocked inside the storage device are either first flat bars with notches (14a) produced with boron, preferably with the same boron content, or second flat bars with notches (14b) produced without boron.

8. Storage device according to any one of the preceding claims, **characterised in that** at least a first flat bar with notches (14a) is produced in one piece, preferably from an aluminium alloy comprising boron, and/or **in that** at least a first flat bar with notches (14a) is provided with a coating comprising boron, preferably applied on an aluminium alloy material.

9. Storage device according to any one of the preceding claims, **characterised in that** at least a second flat bar with notches (14b) is made of an aluminium alloy devoid of boron.

10. Storage device according to any one of the preceding claims, **characterised in that** the stacked and interlocked flat bars (14a, 14b) form together partitions (9, 11) for separating the adjacent housings (4, 4'), each partition extending along the entire height of the storage device or along substantially this entire height, and each partition being formed:
- by the stack of first flat bars with notches (14a); or
- by the stack of second flat bars with notches (14b); or
- by alternating first and second flat bars with notches (14a, 14b); or
- by alternating first and second flat bars with notches (14a, 14b), between which structural elements (24), preferably made of steel, are also arranged.

11. Container (200) for storing and/or transporting nuclear fuel assemblies, the container comprising a cavity (210) wherein a storage device (1) according to any one of the preceding claims is housed.

12. Package (100) comprising a container (200) according to claim 11 as well as nuclear fuel assemblies (2) arranged in the adjacent housings (4, 4') of the storage device (1) of this container (200).
